(19) Europäisches Patentamt
European Patent Office
Office européen des brevets

(11) **EP 4 546 270 A1**

(12) **EUROPEAN PATENT APPLICATION**
published in accordance with Art. 153(4) EPC

(43) Date of publication:
30.04.2025 Bulletin 2025/18

(51) International Patent Classification (IPC):
**G06T 17/00** (2006.01)

(21) Application number: 23826501.1

(22) Date of filing: 21.06.2023

(86) International application number:
PCT/CN2023/101651

(87) International publication number:
WO 2023/246856 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.06.2022 CN 202210724367

(71) Applicant: Future Technology (Xiang Yang) Co.,
Ltd
Xiangyang, Hubei 441000 (CN)

(72) Inventors:
• HE, Shu
  Xiangyang, Hubei 441000 (CN)
• XU, Wanliang
  Xiangyang, Hubei 441000 (CN)

(74) Representative: Winter, Brandl - Partnerschaft
mbB
Alois-Steinecker-Straße 22
85354 Freising (DE)

(54) **3D IMAGE GENERATION METHOD AND APPARATUS, AND COMPUTER DEVICE**

(57) A 3D image generating method, comprising: separating a target 2D image to obtain an initial color image and an initial depth image; associatively processing the initial color image and the initial depth image to correspondingly obtain a first color image and a target depth image, respectively, the target depth image comprising multiple reference pixels; determining a target pixel according to a depth value of the reference pixel, wherein the target pixel is a pixel in the first color image that is present as a hole; determining a hole filling value for the target pixel according to the reference pixel, and performing filling and generating a target color image; and interleaving the initial color image and the target color image to generate a target 3D image. Also provided are a 3D image generation apparatus and a computer device.

| |
|---|
| A target 2D image is separated to obtain an initial color image and an initial depth image — S01 |
| The initial color image and the initial depth image are performed with an associative processing to obtain a first color image and a target depth image, and the target depth image includes a plurality of reference pixels — S02 |
| Target pixels are determined according to the depth values of the reference pixels — S03 |
| A hole filling value of the target pixel is determined according to the reference pixel — S04 |
| The initial color image and the target color image are interleaved to generate the target 3D image — S05 |

FIG. 1

**Description**

**TECHNICAL FIELD**

The present application relates to the technical field of 3D image displaying, and in particular to a 3D image generating method, a 3D image generating device and a computer device.

**BACKGROUND**

A RGBD image includes two images, one is an ordinary RGB three-channel color image, and the other is a depth image. The RGB includes color information of graphics and the depth image includes depth information. The three-channel RGB color image can be rendered from different angles to generate new color images, and then the new color images generated from different angles are taken as the model texture to generate a three-dimensional model.
In the existing 3D image generating method, when being rendered from a certain angle, there will be some holes in the new color image. Therefore, it is necessary to provide a 3D image generating method that can fill the holes.

**SUMMARY**

In order to solve the problem in the related art that the color image generated by rendering has holes, the present application provides a 3D image generating method, a 3D image generating device and a computer device that can fill the holes, so that the holes in the color image generated by rendering are filled, and a 3D image is generated based on the color image without holes.
A first aspect of the present application provides a 3D image generating method, including:

separating a target 2D image to obtain an initial color image and an initial depth image;
performing associative processing on the initial color image and the initial depth image to obtain a first color image and a target depth image, wherein the target depth image comprises a plurality of reference pixels;
determining target pixels according to depth values of the reference pixels, wherein the target pixels are pixels that are holes in the first color image;
determining hole filling values of the target pixels according to the reference pixels, filling the target pixels, and generating a target color image;
interleaving the initial color image and the target color image to generate a target 3D image.

A second aspect of the present application provides a 3D image generating device, including:

a separating unit configured to separate a target 2D image to obtain an initial color image and an initial depth image;
a processing unit configured to perform associative processing on the initial color image and the initial depth image to obtain a first color image and a target depth image, wherein the target depth image comprises a plurality of reference pixels;
a first determining unit configured to determine target pixels according to depth values of the reference pixels, wherein the target pixels are pixels that are holes in the first color image;
a second determining unit configured to determine hole filling values of the target pixels according to the reference pixels, fill the target pixels, and generate a target color image;
a generating unit configured to interleave the initial color image and the target color image to generate a target 3D image.

A third aspect of the present application provides a computer device, which includes at least one connected processor, a memory and a transceiver, wherein the memory is configured to store program codes, and the processor is configured to call the program codes in the memory to execute operations of the 3D image generating of the above first aspect.
Compared with the related art, the 3D image generating method provided by the present application separates a target 2D image to obtain an initial color image and an initial depth image, performs an associative processing on the initial color image and the initial depth image to obtain a first color image and a target depth image, determines a target pixel, which is a hole in the first color image according to a reference pixel in the target depth image, determines a hole filling value of the target pixel according to the reference pixel, completes the filling of holes in the first color image to obtain a target color image without holes, and interleaves the initial color image and the initial depth image to generate a target 3D image without holes.

## BRIEF DESCRIPTION OF THE DRAWINGS

FIG. 1 is a schematic flowchart of a 3D image generating method according to an embodiment of the present application.

FIG. 2 is a schematic flowchart of determining a first color image and a target depth image according to an embodiment of the present application.

FIG. 3 is a schematic diagram showing a relative displacement of a camera during rendering of an initial color image according to an embodiment of the present application.

FIG. 4 is a schematic diagram showing a first reference pixel and four pairs of diagonal pixels of a reference image according to an embodiment of the present application.

FIG. 5 is a schematic diagram showing a preset path according to an embodiment of the present application.

FIG. 6 is a schematic diagram of a 3D image display hardware structure according to an embodiment of the present application.

FIG. 7 is a schematic structural diagram of a server according to the present application.

## DETAILED DESCRIPTION OF THE EMBODIMENTS

The technical solutions in the embodiments of the present application will be clearly and completely described below. Obviously, the described embodiments are only some, and not all of the embodiments of the present application. Based on the embodiments in the present application, all other embodiments obtained by those of ordinary skill in the art without creative efforts fall within the claim of the present application.

The present application provides a 3D image generating method. The 3D image generating method provided by the present application is described below from the perspective of a 3D image generating device. The 3D image generating device can be a terminal device, such as a mobile phone, a tablet or the like, or another device such as a server or the like.

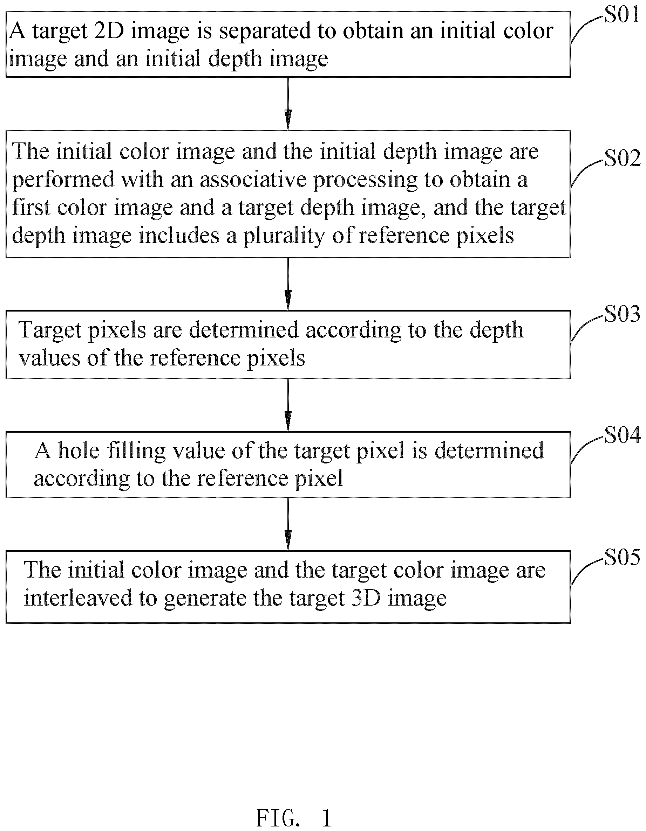

Referring to FIG. 1, FIG. 1 is a schematic flowchart of a 3D image generating method according to an embodiment of the present application. The method includes the following operations.

In operation S01, a target 2D image is separated to obtain an initial color image and an initial depth image.

In this embodiment, the 3D image generating device separates a target 2D image, from which a target 3D image is to be generated, to obtain an initial color image and an initial depth image. The target 2D image is an RGBD image including two images. One of the two images is an ordinary RGB three-channel color image including color information of graphics, and the other is a depth image including depth information. The initial color image is an RGB three-channel color image including multiple pixels. Each pixel is represented by a coordinate value (x, y) and has a pixel value which represents RGB color information. The initial depth image is a depth image and includes a plurality of pixels. The pixels of the initial depth image have coordinate values corresponding to the target depth image. Each pixel of the initial depth image has a depth value representing depth information.

In operation S02, the initial color image and the initial depth image are performed with an associative processing to obtain a first color image and a target depth image, and the target depth image includes a plurality of reference pixels.

In this embodiment, the 3D image generating device performs associative processing on the initial color image and the initial depth image to obtain a first color image and a target depth image. The target depth image includes multiple reference pixels, and each reference pixel can be any pixel in the target depth image. Two methods of associative processing are detailed below.

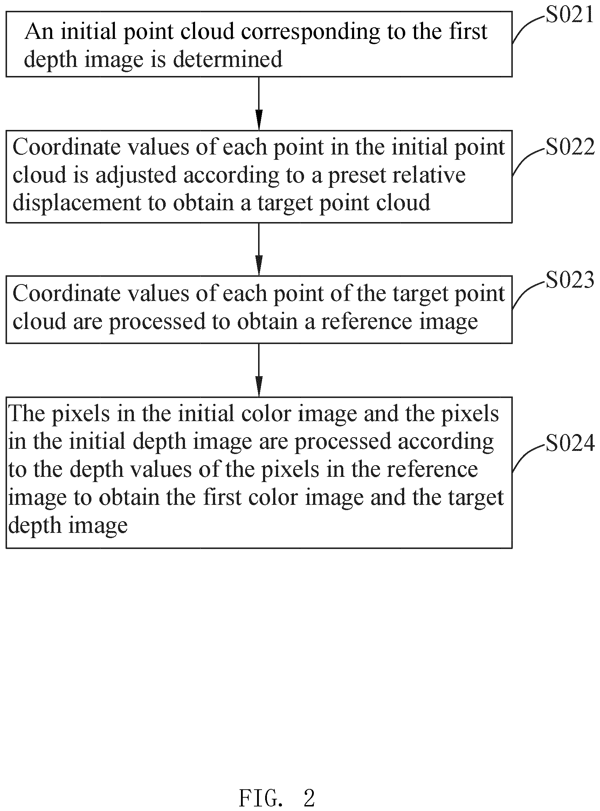

The first method of associative processing will be described below with reference to FIG. 2. FIG. 2 is a schematic flowchart for determining the first color image and the target depth image according to an embodiment of the present application, which includes the following operations.

In operation S021, an initial point cloud corresponding to the first depth image is determined.

In this embodiment, after the initial depth image is obtained, the initial depth image is remapped to be a first depth image according to a formula:

$$I_{d1}(z) = I_d(z) / D\max * MaxDepth$$

$I_d$ represents the initial depth image, $I_{d1}$ represents the first depth image, $I_d(z)$ is a depth value of any pixel in the initial depth image, and $D\max$ is the maximum depth value of pixels of the initial depth image. *MaxDepth* is an empirical value, which can be 100 or another value, such as 80, 90 or 110, which is not specifically limited as long as it does not exceed the maximum floating-point value. The coordinate values of pixels of the first depth image obtained by remapping correspond to the coordinate values of pixels of the initial depth image one to one. $I_{d1}(z)$ is a depth value of a pixel of the first depth image having coordinate values identical to those of $I_d(z)$.

After the first depth image is obtained, the first depth image is converted into an initial point cloud according to a formula:

$$P0\left(x, y, z\right) = \left(-w/2 + x, -h/2 + y, I_{d1}\left(x, y\right)\right),$$

where $0 \leq x < w$, $0 \leq y < h$, P0 represents the initial point cloud, P0(x, y, z) are coordinate values of any point in the initial point cloud, W represents a width of the first depth image, $h$ represents a height of the first depth image, and $I_{d1}(x, y)$ represents a depth value of a pixel with coordinate values (x, y) in the first depth image.

In operation S022, coordinate values of each point in the initial point cloud is adjusted according to a preset relative displacement to obtain a target point cloud.

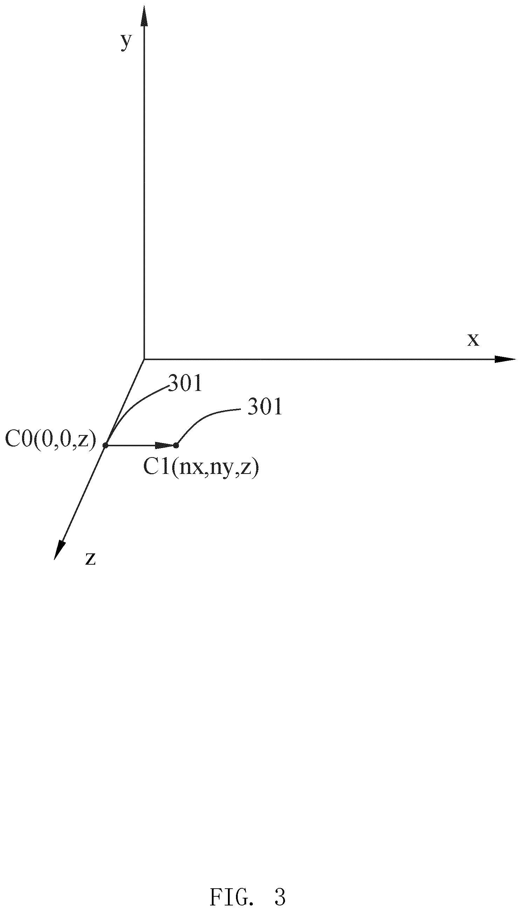

In this embodiment, the preset relative displacement is explained with reference to FIG. 3. FIG. 3 is a schematic diagram showing a relative displacement of a camera during rendering of the initial color image according to an embodiment of the present application. During the rendering of the initial color image, a coordinate point C0 is where the camera 301 was located. The camera 301 was located in a three-dimensional space defined by the x-axis, the y-axis and the z-axis, and the coordinate point C0 has coordinate values (0, 0, z). Different rendered images can be obtained by changing the location of the camera 301. The 3D display image can be generated by interleaving the different rendered images corresponding to different locations of the camera 301. However, in order to keep sizes of the different rendered images to be same, the location of the camera 301 was remained unchanged on the z-axis. The changed location of the camera 301 was at a coordinate point C1, and the coordinate point C1 has coordinate values (nx, ny, z). The difference between the two locations of the camera 301 forms the preset relative displacement, and the preset relative displacement of the camera 301 is determined according to a formula:

$$D = C1 - C0 = \left(nx, ny, 0\right),$$

where D is the preset relative displacement of the camera 301.

Further, the preset relative displacement is added to the initial point cloud to obtain the target point cloud. In this embodiment, the target point cloud is determined according to a formula:

$$P1\left(x, y, z\right) = P0\left(x, y, z\right) + D.$$

where P0 (x, y, z) represent the coordinate values of any point of the initial point cloud, P1 represents the target point cloud, P1(x, y, z) are the coordinate values of the point in the target point cloud. The coordinate values P1(x, y, z) of the point are obtained by adding D to the coordinate values PO (x, y, z). Since the location of the camera was remained unchanged on the z-axis and D has values (nx, ny, 0), z-values of the coordinate values of the target point cloud and the initial point cloud are the same.

In operation S023, coordinate values of each point of the target point cloud are processed to obtain a reference image.

In this embodiment, the reference image is a depth image that matches a size of the initial depth image, and is initially assigned with a depth value A. Each point of the target point cloud is calculated by the 3D image generating device according to the following formulas to obtain the reference image:

$$Z\left(x, y\right) = \min\left(Z\left(IP.x + 1, IP.y + 1\right), FltErr\right),$$

$$FltErr = A - w/(2 * z0);$$

$$IP = LP + Dis * DLP ;$$

$$Dis = \left(PP - LP\right) * PN ;$$

and

$$DLP = -LP,$$

where $Z$ is the reference image, $Z(x, y)$ is a depth value of a pixel with coordinate values $(x, y)$ in the reference image, $Z(IP.x +1, IP.y+1)$ is a depth value of a pixel with coordinate values $(IP.x+1, IP.y+1)$ in the reference image, min means to assign $Z(x, y)$ with a smaller one of $Z(IP.x+1, IP.y+1)$ and $FltErr$.

$$LP = \left(x0, \overrightarrow{y0, z0}\right), \quad PN = \left(\overrightarrow{0,0,1}\right), \quad PP = \left(0,0,\overrightarrow{w/2}\right)$$, $A$ is an initial depth value of the reference image, $w$ is the width of the first depth image, $(x0, y0, z0)$ are coordinate values of any point in the target point cloud, $IP.x$ is the x-value of the coordinate values of the point $IP$, and $IP.y$ is the y-value of the coordinate values of the point $IP$.

The reference image is a depth image with the same size as the first depth image. A width of the reference image is same to the width of the first depth image, and a height of the reference image is same to the height of the first depth image. The initial depth value of the reference image is $A$. The initial depth value $A$ can be 100000.0, 90000.0, or 110000.0 which is not specifically limited as long as the initial depth value $A$ is greater than the depth value of the first depth image and less than the maximum floating-point value.

It should be noted that after the reference image is determined, the depth value of each pixel in the reference image can be optimized according to the following operations, such that the target 3D image, which is finally generated, is optimized.

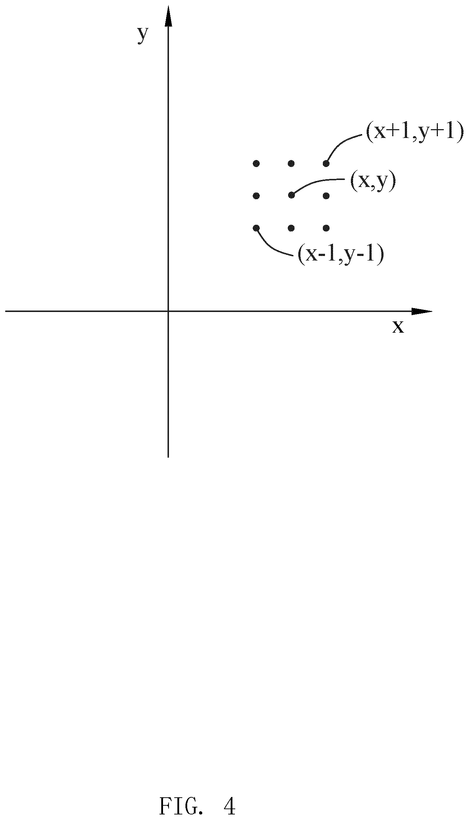

The optimization of the pixels of the reference image will be described in detail below with reference to FIG. 4. FIG. 4 is a schematic diagram showing a first reference pixel and four pairs of diagonal pixels of the reference image according to an embodiment of the present application.

The first reference pixel is determined, and the first reference pixel is a pixel of the reference image whose depth value is to be optimized. If a depth value of the first reference pixel is greater than depth values of the four pairs of diagonal pixels, the depth value of the first reference pixel is changed to be equal to an average of the depth values of the four pairs of diagonal pixels.

It can be understood that the first reference pixel can be any pixel in the reference image, and the optimization process is described by taking coordinate values of the first reference as $(x, y)$. The coordinate values of the four pairs of diagonal pixels are a pair of diagonal pixels including an upper pixel and a lower pixel, a pair of diagonal pixels including a left pixel and a right pixel of the first reference pixel, and two pairs of diagonal pixels (as shown in FIG. 4). Coordinate values of the upper pixel are $(x, y + 1)$, coordinate values of the lower pixel are $(x, y - 1)$, coordinate values of the left pixel are $(x - 1, y)$, and coordinate values of the right pixel are $(x + 1, y)$. Coordinate values of the two pairs of diagonal pixels are $(x - 1, y - 1)$, $(x + 1, y + 1)$, $(x + 1, y - 1)$ and $(x - 1, y +1)$.

The optimization method of the first reference pixel will be described below with reference to FIG. 4. The optimization method includes the following operations.

In operation A1, in responding to that the depth value of the first reference pixel meets conditions of $Z(x, y) > Z(x-1, y)$ and $Z(x, y) > Z(x+1, y)$,
$Zsum = Zsum + Z (x - 1, y) + Z (x + 1, y)$, and $Ztol = Ztol + 2$ are applied.

In operation A2, in responding to that the depth value of the first reference pixel meets conditions of $Z (x, y) > Z (x, y - 1)$ and $Z_1 (x, y) > Z (x, y + 1)$,
$Zsum = Zsum + Z (x, y - 1) + Z (x, y + 1)$ and $Ztol = Ztol + 2$ are applied.

In operation A3, in responding to that the depth value of the first reference pixel meets conditions of $Z(x, y) > Z(x - 1, y - 1)$ and $Z(x, y) > Z(x + 1, y + 1)$, $Zsum = Zsum + Z (x - 1, y - 1) + Z (x + 1, y + 1)$ and $Ztol = Zt0l + 2$ are applied.

In operation A4, in responding to that the depth value of the first reference pixel meets conditions of $Z (x + 1, y - 1)$, and $Z (x, y) > Z (x - 1, y + 1)$, $Zsum = Zsum + Z (x + 1, y - 1) + Z (x - 1, y + 1)$ and $Ztol = Ztol + 2$ are applied.

In operation A5, an average value is calculated according to a formula:

$$Z (x, y) = Zsum / Ztol,$$

where values of $Zsum$ and $Ztol$ are initially 0. In a condition that the depth value of the first reference pixel with coordinate values $(x, y)$ meets conditions defined by any one of operations A1 to A4, a new depth value is obtained and the initial depth value of the first reference pixel is replaced by the new depth value.

$Z (x, y)$ is the depth value of the first reference pixel in the reference image, $Z (x + 1, y)$ is a depth value of a pixel with coordinate values $(x + 1, y)$ in the reference image, $Z (x - 1, y)$ is a depth value of a pixel with coordinate values $(x - 1, y)$ in the reference image, $Z (x, y - 1)$ is a depth value of a pixel with coordinate values $(x, y - 1)$ in the reference image, $Z (x, y + 1)$ is a depth value of a pixel with coordinate values $(x, y + 1)$ in the reference image, $Z (x + 1, y + 1)$ is a depth value of a pixel with coordinate values *(x + 1, y + 1)* in the reference image, *Z (x - 1, y - 1)* is a depth value of a pixel with coordinate values *(x - 1, y - 1)* in the reference image, *Z (x - 1, y + 1)* is a depth value of a pixel with coordinate values *(x - 1, y + 1)* in the reference image, Z *(x + 1, y - 1)* is a depth value of a pixel with coordinate values *(x + 1, y - 1)* in the reference image.

It should be noted that, operation A1, operation A2, operation A3 and operation A4 are utilized to determine whether the depth value of the first reference pixel is greater than the depth values of its four pairs of diagonal pixels, and the average value is obtained in operation A5, however, an order of executing operations A1, A2, A3 and A4 is not specifically defined and limited. Anyone of operations, A1, A2, A3 and A4 can be executed first, which is not specific limited here.

In operation S024, the pixels in the initial color image and the pixels in the initial depth image are processed according to the depth values of the pixels in the reference image to obtain the first color image and the target depth image.

In this embodiment, the first color image is determined according to the following formula:

$$I_{c1}\left(IP.x, IP.y\right) = I_c\left(x, y\right) * \left(\left(Z\left(x, y\right) + 1\right) > FltErr\right),$$

where $I_c$ is the initial color image, $I_{c1}$ is the first color image, *IP.x* is the x-value of the coordinate values of the point *IP*, *IP.y* is the y-value of the coordinate values of the point *IP*, $I_c(x, y)$ is a pixel value of a pixel with coordinate values (*x, y*) in the initial color image, and *Z(x, y)* is a depth value of a pixel with coordinate values (*x, y*) in the reference image. $I_{c1}$(*IP.x, IP.y*) is the pixel value of the pixel with coordinate values (*IP.x, IP.y*) in the first color image.

In a condition that (*Z(x,y)*+1)>*FltErr* is met, ((*Z (x, y)* + 1)>*FltErr*) is 1, then the pixel with coordinate values (*IPx, IP.y*) in the first color image is assigned with the pixel value of the pixel with coordinate values (*x, y*) in the initial depth image.

In a condition that (*Z(x,y)*+1)>*FltErr* is not met, ((*Z (x, y)* + 1)>*FltErr*) is 0, then the pixel value of the pixel with coordinate values (*IPx, IP.y*) in the first color image is assigned with 0.

The target depth image is determined according to the following formula:

$$I_{d2}(IP.x, IP.y) = I_d(x, y) * \left(\left(Z(x, y) + 1\right) > FltErr\right);$$

where $I_d$ represents the initial depth image, $I_{d2}$ represents the target depth image, $I_d(x, y)$ is the depth value of the pixel with coordinate values (*x, y*) in the initial depth image, $I_{d2}$(*IP.x, IP.y*) is a depth value of the pixel with coordinate values (*IP.x, IP.y*) in the target depth image. In a condition that ((*Z(x,y)*+1)>*FltErr*) is 1, the pixel with coordinate values (*IP.x, IP.y*) in the target depth image is assigned with the depth value of the pixel with coordinate values (*x, y*) in the initial depth image. In a condition that ((*Z(x,y)*+1)>*FltErr*) is 0, the depth value of the pixel with the coordinate values (*IP.x, IP.y*) in the target depth image is assigned with a value of 0.

In this method, associative processing are performed on the initial color image and the initial depth image through the initial point cloud, the target point cloud and the reference image, and resulted pixel values of the pixels in the first color image are associative with the depth values of the pixels in the target depth image.

The second associative processing method is explained below. The second associative processing method includes the following operations.

In operation C1, a preset depth of field of the target 3D image is determined. The preset depth of field of the target 3D image on the x-axis is nx0 to nx1, and the preset depth of field on the y-axis is ny0 to ny1.

In this embodiment, the preset depth of field is a preset parallax, which is a certain number in units of pixel. The x-axis is parallel to the width of the 3D image, and the y-axis is parallel to the height of the 3D image. For example, the preset depth of field of the target 3D image on the x-axis is 10 to 100 pixel units, then nx0 is 10 pixel units and nx1 is 100 pixel units. The preset depth of field can be 0 pixel unit. For example, if the target 3D image has no parallax on the y-axis and the preset depth of field is 0 pixel unit, ny0 is 0 pixel unit and ny1 is 0 pixel unit.

In operation C2, a ratio of the preset depth of field to a depth range of the initial depth image is determined according to formulas:

$$DepthRateX = \left(nx1 - nx0\right) / \left(D\max - D\min\right),$$

and

$$DepthRateY = \left(ny1 - ny0\right) / \left(D\max - D\min\right),$$

where *DepthRateX* is a ratio of the preset depth of field to the depth range of the initial depth image on the x-axis, *DepthRateY* is a ratio of the preset depth of field to the depth range of the initial depth image on the y-axis, and *D* max is the maximum depth value and D min is the minimum depth value of the initial depth image.

In operation C3, *Pos_x* and *Pos_y* are determined according to formulas:

$$Pos\_x = x + \left(I_d\left(x,y\right) - D\min\right) * DethRateX + nx0 \; ;$$

and

$$Pos\_y = y + \left(I_d\left(x,y\right) - D\min\right) * DethRateY + ny0 \; ,$$

where $I_d$ is the initial depth image, $I_d(x, y)$ is the depth value of the pixel with coordinate values (x, y) in the initial depth image, x is an x-value of the coordinate values of the pixel with coordinate values (x, y), and y is a y value of the coordinate values of the pixel with coordinate values (x, y).

In operation C4, the first color image and the target depth image are determined according to formulas:

$$I_{c1}\left(Pos\_x, Pos\_y\right) = I_c\left(x,y\right) \; ,$$

and

$$I_{d2}\left(Pos\_x, Pos\_y\right) = I_d\left(x,y\right) \; ,$$

where $I_c$ is the initial color image, $I_{c1}$ is the first color image, $I_c(x, y)$ is the pixel value of the pixel with coordinate values (x, y) in the initial color image, $I_{c1}(Pos\_x, Pos\_y)$ is a pixel value of a pixel with coordinate values (*Pos_x, Pos_y*) in the first color image, $I_d$ is the initial depth image, $I_{d2}$ is the target depth image, and $I_{d2}(Pos\_x, Pos\_y)$ is a depth value of the pixel with coordinate values *(Pos_x, Pos_y)* in the target depth image. The above formula is to assign the pixel value of the pixel with coordinate values (x, y) in the initial color image to the pixel with coordinate values (*Pos_x, Pos_y*) in the first color image, and assign the depth value of the pixel with the coordinate values (x, y) in the initial depth image to the pixel with the coordinate values (*Pos_x, Pos_y*) in the target depth image.

This method carries out the associative processing of the initial color image and the initial depth map through *Pos_x* and *Pos_y,* and associates an offset of the first color image relative to the initial color image with the depth value of the first depth image. When the depth value of the initial depth image is larger, an offset of the pixel with coordinate values (*Pos_x, Pos_y*) in the first depth image relative to the pixel with coordinate values (x, y) in the initial depth image is larger too. The pixel values of the pixels in the first color image obtained by this method are associated with the depth values of the pixels in the target depth image. The target depth image includes a plurality of reference pixels.

In operation S03, target pixels are determined according to the depth values of the reference pixels.

In this embodiment, after the first color image and the target depth image are determined, the 3D image generating device determines whether a pixel of the first color image is a hole based on a depth value of a reference pixel. Coordinate values of the pixel of the target color image is the same as coordinate values of the reference pixel. Pixels that are holes in the target color image are determined as target pixels.

The determining of a target pixel in the target color image is detailed below.

In a condition that $I_{d2}(x, y) \leq 0$ is met, the pixel with coordinate values *(x, y)* in the first color image is determined as the target pixel which is a hole, where $I_{d2}$ represents the target depth image, $I_{d2}(x, y)$ is a depth value of a reference pixel with coordinate values (x, y) in the target depth image. That is, in a condition that $I_{d2}(x, y) \leq 0$ is met, the pixel value of the pixel with coordinate values (x, y) in the first color image is 0, and for the color value is zero, the pixel is a hole.

In operation S04, a hole filling value of the target pixel is determined according to the reference pixel.

In an embodiment, after the target pixel, which is a hole, in the first color image is determined, the 3D image generating device determines the hole filling value of the target value according to the coordinate values and a pixel value of the reference pixel, and fills the hole of the first color image according to the hole filling value to generate the target color image.

How to determine the hole filling value of the target pixel is described below, which includes the following operations.

In operation B1, preset paths of traversing the reference pixels are set.

In this embodiment, the preset paths can be set according to the actual situation. For example, the preset paths can be 16, 6, or 5, which are not specifically limited. The preset paths can be determined based on the generating of the target 3D image.

16 preset paths are taken as examples to detail the traversal method.

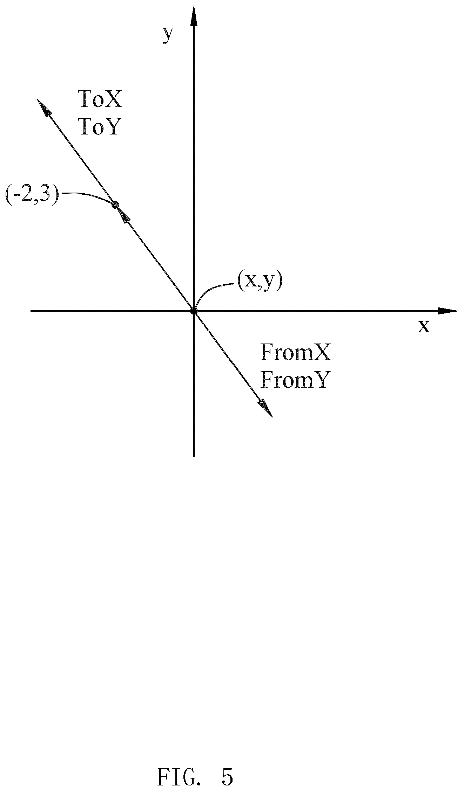

The preset paths are represented by Dirs, and there are 16 preset search directions for traversal, that is, Dirs=(-1, 1), (0, 1), (1, 1), (1, 0), (-1, 2 ), (1, 2), (2, 1), (2, -1), (-2, 3), (-1, 3), (1, 3), (2, 3), (3, 2), (3, 1), (3, -1), (3, -2). Referring to FIG. 5, FIG. 5 is a schematic diagram showing a preset path according to an embodiment of the present application. The preset path shown in FIG. 5 is Dirs=(-2, 3).

In operation B2, the preset paths are traversed based on coordinate values of the reference pixels, and a first target pixel and a second target pixel that meet a preset condition are determined.

The operations of traversing the reference pixels will be described below with reference to FIG. 5. Taking the reference pixel with coordinate values $(x, y)$ as a starting point, and the traversal is performed in each of the preset directions according to the following operations.

In operation B21, negative direction traversal is performed according to formulas:

$$FromX = FromX - Dirs[i][0],$$

and

$$FromY = FromY - Dirs[i][1].$$

The negative direction traversal is performed until $I_{d2}(FromX, FromY)>0$ is met or one of *FromX* and *FromY* exceeds the boundary of the target depth image.

[*i*] in *Dirs*[*i*][0] and *Dirs*[*i*][1] represents the preset path to be traversed, and [0] means that a value of *Dirs*[*i*][0] is equal to a left one of coordinate values of the preset path. [1] means that a value of *Dirs*[*i*][1] is equal to a right one of the coordinate values of the preset path. For example, the preset path is *Dirs* = (-2, 3), when coordinate values (-2, 3) is used as the preset direction for the negative direction traversal (as shown in FIG. 5), and *FramX = FramX* - (-2) and *From Y = From Y* - *3* are determined.

In operation B22, positive direction traversal is performed according to formulas:

$$ToX = ToX + Dirs[i][0],$$

and

$$ToY = ToY + Dirs[i][1].$$

The positive direction traversal is performed until $I_{d2}(ToX, ToY)>0$ is met or one of *ToX* and *ToY* exceeds the boundary of the target depth image.

[*i*] in *Dirs*[*i*][0] and *Dirs*[*i*][1] represents the preset path to be traversed, and [0] means that the value of *Dirs*[*i*][0] is equal to a left one of coordinate values of the preset path. [1] means that a value of *Dirs*[i][1] is equal to a right one of the coordinate values of the preset path. For example, the preset path is *Dirs* = (-2, 3), when coordinate values (-2, 3) is used as the preset direction for the positive direction traversal (as shown in FIG. 5), and *ToX = ToX* + (-2) and *ToY = To Y + 3* are determined.

In operation B23, whether *FromX , FromY , ToX* and *ToY* exceed the boundary of the target depth image is determined. In a condition that one of them exceeds the boundary, a formula as follows is applied:

$$FltDis = FLOAT\_MAX.$$

In a condition that *FromX, FromY, ToX* and *ToY* do not exceed the boundary of the target depth image, a formula as follows is applied:

$$FltDis = \sqrt{(ToX - FromY)^2 + (ToY - FromX)^2}.$$

*FLOAT_MAX* is the maximum floating-point value.

In operation B24, after all 16 preset paths are traversed, values of *FromX , FromY, ToX* and *ToY,* which result in the minimum value of *FltDis,* are determined, and a combination of (*FromX , FromY*) are taken as the coordinate values of the first target pixel of the target depth image, and a combination of (*ToX , ToY*) are taken as the coordinate values of the second target pixel of the target depth image.

It should be noted that the operations B21 and B22 are employed to determine the values of *FromX , FromY, ToX* and *ToY* of traversing the preset paths. However, the executing of operations B21 and B22 is not limited to a fixed order. Operation B21 can be executed first or operation B22 can be executed first which is not specifically limited here.

In operation B3, the hole filling value of the target pixel is determined according to the coordinate values of the first target pixel and the coordinate values of the second target pixel.

In this embodiment, in a condition that a relationship of the depth values of the first target pixel and the second target pixel is $I_{d2}(FromX, FromY) < I_{d2}(ToX, ToY)$, *FillX = FromX* and *FillY = FromY* are determined. In a condition that the relationship of the depth values of the first target pixel and the second target pixel is $I_{d2}(FromX, FromY) \geq I_{d2}(ToX, ToY)$, *FillX = ToX* and *FillY = ToY* are determined.

$I_{d2}(FromX, FromY)$ is the depth value of the first target pixel, and $I_{d2}(ToX, ToY)$ is the depth value of the second target pixel.

The hole filling value is determined according to a formula:

$$I_{c1}\left(x, y\right) = I_{c1}\left(FillX, FillY\right),$$

where $I_{c1}$ represents the first color image, (x, y) is the coordinate values of the target pixel, $I_{c1}(x, y)$ is the hole filling value of the target pixel, $I_{c1}$ (*FillX , FillY*) is the pixel value of the pixel with coordinate values (*FillX, FillY*) in the first color image. The pixel value of the pixel with coordinate values (*FillX , FillY*) in the first color image is determined as the hole filling value according to the formula.

The hole filling value is assigned to the target pixel to fill the hole in the target color image, and the target color image without holes is obtained.

In operation S05, the initial color image and the target color image are interleaved to generate the target 3D image.

In this embodiment, the 3D image generating device interleaves the initial color image and the target color image without holes to generate the target 3D image.

Compared with the related art, the 3D image generating method provided by the present application separates a target 2D image to obtain an initial color image and an initial depth image, performs an associative processing on the initial color image and the initial depth image to obtain a first color image and a target depth image, determines a target pixel, which is a hole in the first color image according to a reference pixel in the target depth image, determines a hole filling value of the target pixel according to the reference pixel, completes the filling of holes in the first color image to obtain a target color image without holes, and interleaves the initial color image and the initial depth image to generate a target 3D image without holes.

The present application is described above from the perspective of the 3D image generating method, and the present application is described below from the perspective of the 3D image generating device.

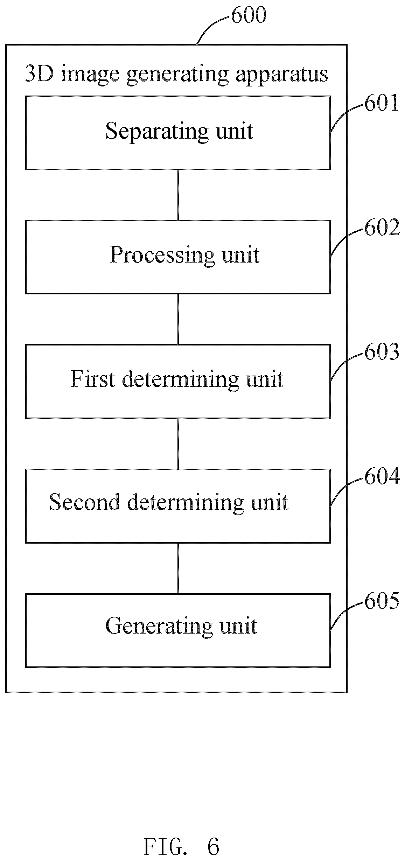

Referring to FIG. 6, FIG. 6 is a schematic diagram of a 3D image display hardware structure according to an embodiment of the present application. The 3D image generating apparatus 600 includes:

a separating unit 601 configured to separate a target 2D image to obtain an initial color image and an initial depth image;

a processing unit 602 configured to perform an associative processing on the initial color image and the initial depth image to obtain a first color image and a target depth image, the target depth image including a plurality of reference pixels;

a first determining unit 603 configured to determine target pixels according to depth values of the reference pixels, where the target pixels are pixels that are holes in the first color image;

a second determining unit 604 configured to determine hole filling values of the target pixels according to the reference pixels, fill the target pixels, and generates a target color image, the target color image being obtained by filling the holes in the first image;

a generating unit 605 configured to interleave the initial color image and the target color image to generate a target 3D image.

In an embodiment, the second determining unit 604 is further configured to:

set preset paths of traversing the reference pixels, where the preset paths are set in the target depth image;

traverse the preset paths based on coordinate values of the reference pixels, and determine a first target pixel and a second target pixel that meet a preset condition;

determine the hole filling values according to coordinate values of the first target pixel and coordinate values of the second target pixel.

In an embodiment, the second determining unit 604 is further configured to:

in responding to that a depth value of the first target pixel is less than a depth value of the second target pixel, taking a pixel value of a pixel in the first color image as a hole filling value, where coordinate values of the pixel in the first color image are the same as the coordinate values of the first target pixel;

in responding to that the depth value of the first target pixel is greater than or equal to the depth value of the second target pixel, take a pixel value of a pixel in the first color image as a hole filling value, where coordinate values of the pixel in the first color image are the same as the coordinate values of the second target pixel.

In an embodiment, the first determining unit 603 is further configured to:

in a condition that $I_{d2}(x, y) \leq 0$ is met, determine that a pixel with coordinate values $(x, y)$ in the first color image is a target pixel which is a hole, where $I_{d2}$ is the target depth image, $I_{d2}(x, y)$ is a depth value of the reference pixel with coordinate values $(x, y)$ in the target depth image.

In an embodiment, the processing unit 602 is further configured to:

determine an initial point cloud corresponding to a first depth image, where the first depth image is obtained by remapping of the initial depth image;

adjust coordinate values of each point in the initial point cloud according to a preset relative displacement to obtain a target point cloud;

process coordinate values of each point in the target point cloud to obtain a reference image, where the reference image is a depth image that matches a size of the initial depth image;

process pixels in the initial color image and pixels in the initial depth image according to depth values of pixels in the reference image to obtain the first color image and the target depth image.

In an embodiment, the processing unit 602 is further configured to:

determine the reference image according to the following formulas:

$$Z(x, y) = \min \left( Z\left( IP.x+1, IP.y+1 \right), FltErr \right);$$

$$FltErr = A - w/(2 * z0);$$

$$IP = LP + Dis * DLP;$$

$$Dis = \left( PP - LP \right) * PN;$$

and

$$DLP = -LP,$$

where $Z$ is the reference image, $Z(x,y)$ is a depth value of a pixel with coordinate values $(x, y)$ in the reference image, $Z(IP.x+1, IP.y+1)$ is a depth value of a pixel with coordinate values $(IP.x+1, IP.y+1)$ in the reference image, and min means to assign $Z(x, y)$ with a smaller one of $Z(IPx+1, IPy+1)$ and $FltErr$;

$$LP = \left( x0, \vec{y0}, z0 \right), \quad PN = \left( 0, \vec{0}, 1 \right), \quad PP = \left( 0, 0, \vec{w}/2 \right)$$, $A$ is an initial depth value of the reference image, $w$ is a width of the first depth image, $(x0, y0, z0)$ are coordinate values of any point in the target point cloud, $IP.x$ is an x-value of coordinate values of a point $IP$, and $IP.y$ is a y-value of the coordinate values of the point $IP$.

In an embodiment, the processing unit 602 is further configured to:

process the initial color image to obtain the first color image according to the following formula:

$$I_{c1}\left(IP.x, IP.y\right) = I_c\left(x, y\right) * \left(\left(Z\left(x, y\right) + 1\right) > FltErr\right),$$

where $I_c$ is the initial color image, $I_{c1}$ is the first color image, $I_c(x, y)$ is a pixel value of a pixel with coordinate values $(x, y)$ in the initial color image, and $Z(x, y)$ is a depth value of a pixel with coordinate values $(x, y)$ in the reference image. $I_{c1}$ $(IP.x, Ip.y)$ is a pixel value of a pixel with coordinate values $(IP.x, IP.y)$ in the first color image;
process the initial depth image to obtain the target depth image according to the following formula:

$$I_{d2}\left(IP.x, IP.y\right) = I_d\left(x, y\right) * \left(\left(Z\left(x, y\right) + 1\right) > FltErr\right),$$

where $I_d$ represents the initial depth image, $I_{d2}$ represents the target depth image, $I_d(x, y)$ is a depth value of a pixel with coordinate values $(x, y)$ in the initial depth image, $I_{d2}(IP.x, IP.y)$ is a depth value of a pixel with coordinate values $(IP.x, IP.y)$ in the target depth image.

In an embodiment, the processing unit 602 is further configured to:

determine a preset depth of field of the target 3D image, the preset depth of field of the target 3D image on an x-axis being nx0 to nx1, and the preset depth of field on the y-axis being ny0 to ny1;
determine a ratio of the preset depth of field to a depth range of the initial depth image according to the following formulas:

$$DepthRateX = \left(nx1 - nx0\right) / \left(D\max - D\min\right),$$

and

$$DepthRateY = \left(ny1 - ny0\right) / \left(D\max - D\min\right),$$

where $DepthRateX$ is a ratio of the preset depth of field to the depth range of the initial depth image on the x-axis, $DepthRateY$ is a ratio of the preset depth of field to the depth range of the initial depth image on the y-axis, and $D\max$ is the maximum depth value and $D\min$ is the minimum depth value of the initial depth image;
determine Pos_x and Pos_y according to the following formulas:

$$Pos\_x = x + \left(I_d\left(x, y\right) - D\min\right) * DethRateX + nx0,$$

$$Pos\_y = y + \left(I_d\left(x, y\right) - D\min\right) * DethRateY + ny0;$$

determine the first color image and the target depth image according to the following formulas:

$$I_{c1}\left(Pos\_x, Pos\_y\right) = I_c\left(x, y\right),$$

and

$$I_{d2}\left(Pos\_x, Pos\_y\right) = I_d\left(x, y\right),$$

where $I_c$ is the initial color image, $I_{c1}$ is the first color image, $I_c(x, y)$ is the pixel value of the pixel with coordinate values $(x, y)$ in the initial color image, $I_{c1}(Pos\_x, Pos\_y)$ is a pixel value of a pixel with coordinate values $(Pos\_x, Pos\_y)$ in the first color image, $I_d$ is the initial depth image, $I_{d2}$ is the target depth image, and $I_{d2}(Pos\_x, Pos\_y)$ is a depth value of the pixel with coordinate values *(Pos_x, Pos_y)* in the target depth image.

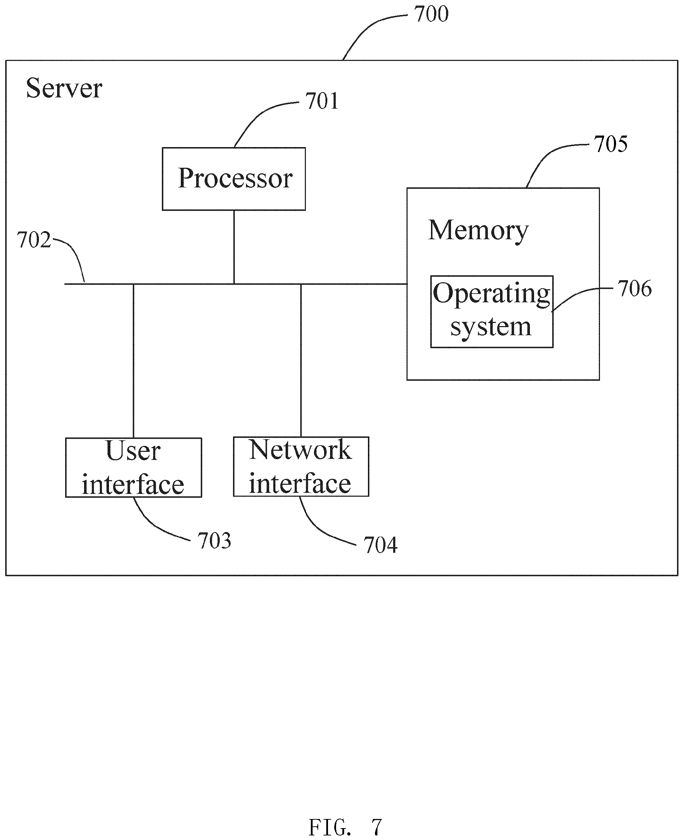

Referring to FIG. 7, FIG. 7 is a schematic structural diagram of a server of the present application. The server 700 in this embodiment includes at least one processor 701, at least one network interface 704 or another user interface 703, a memory 705, and at least one communication bus 702. The server 600 optionally includes the user interface 703, which can be a display, a keyboard, or a pointing device. The memory 705 may be a high-speed RAM memory, or may be a non-volatile memory, such as at least one disk memory. The memory 705 stores executable instructions. When the server 700 is running, the processor 701 communicates with the memory 705, and the processor 701 invokes the instructions stored in the memory 705 to execute the above-mentioned 3D image generating method. The operating system 706 includes various programs for implementing various basic tasks and processing hardware-based tasks.

The server provided by the embodiment of the present application can execute the above-mentioned embodiments of the 3D image generating method. The implementation principles and technical effects are similar to the above and will not be repeated here.

Embodiments of the present application also provide a computer-readable medium that includes computer-executable instructions. The computer-executable instructions enable a server to execute the 3D image generating method described in the above embodiments. The implementation principles and technical effects are similar to the above and will not be described again here.

Persons of ordinary skill in the art can understand that all or part of the operations of the embodiments of the above method can be implemented by hardware related to program instructions. The aforementioned program instructions can be stored in a computer-readable storage medium. When the program instructions are executed, the operations including the embodiments of the above-mentioned method are executed. The aforementioned storage media can be a ROM, a RAM, a magnetic disk, an optical disks or another medium that can store program codes.

The above are only some of the embodiments of the present application, and are not intended to limit the scope of the present application. Any equivalent structure or equivalent process transformation made based on the description and drawings of the present application, and any direct or indirect utilization in another related technical field are all equally included in the scope of the present application.

**Claims**

1. A 3D image generating method, **characterized by** comprising:

   separating a target 2D image to obtain an initial color image and an initial depth image;
   performing associative processing on the initial color image and the initial depth image to obtain a first color image and a target depth image, wherein the target depth image comprises a plurality of reference pixels;
   determining target pixels according to depth values of the reference pixels, wherein the target pixels are pixels that are holes in the first color image;
   determining hole filling values of the target pixels according to the reference pixels, filling the target pixels, and generating a target color image;
   interleaving the initial color image and the target color image to generate a target 3D image.

2. The method according to claim 1, wherein the determining the hole filling values of the target pixels according to the reference pixels comprises:

   setting preset paths of traversing the reference pixels, wherein the preset paths are set in the target depth image;
   traversing the preset paths based on coordinate values of the reference pixels, and determining a first target pixel and a second target pixel that meet a preset condition;
   determining the hole filling values according to coordinate values of the first target pixel and coordinate values of the second target pixel.

3. The method according to claim 2, wherein the determining the hole filling values according to the coordinate values of the first target pixel and the coordinate values of the second target pixel comprises:

   in responding to that a depth value of the first target pixel is less than a depth value of the second target pixel, taking a pixel value of a pixel in the first color image as a hole filling value, where coordinate values of the pixel in the first color image are same as the coordinate values of the first target pixel;
   in responding to that a depth value of the first target pixel is greater than or equal to a depth value of the second target pixel, taking a pixel value of a pixel in the first color image as a hole filling value, where coordinate values of the pixel in the first color image are same as the coordinate values of the second target pixel.

4. The method according to claim 1, wherein the determining the target pixels according to the depth values of the reference pixels comprises:
in a condition that $I_{d2}(x, y) \leq 0$ is met, determining that a pixel with coordinate values $(x, y)$ in the first color image is a target pixel which is a hole, wherein $I_{d2}$ is the target depth image, $I_{d2}(x, y)$ is a depth value of the reference pixel with coordinate values $(x, y)$ in the target depth image.

5. The method according to claim 1, wherein the performing associative processing on the initial color image and the initial depth image to obtain the first color image and the target depth image comprises:

   determining an initial point cloud corresponding to a first depth image, wherein the first depth image is obtained by remapping of the initial depth image;
   adjusting coordinate values of each point in the initial point cloud according to a preset relative displacement to obtain a target point cloud;
   processing coordinate values of each point in the target point cloud to obtain a reference image, wherein the reference image is a depth image that matches a size of the initial depth image;
   processing pixels in the initial color image and pixels in the initial depth image according to depth values of pixels in the reference image to obtain the first color image and the target depth image.

6. The method according to claim 5, wherein the processing the coordinate values of each point in the target point cloud to obtain the reference image comprises:

   determining the reference image according to formulas:

$$Z\left(x, y\right) = \min\left(Z\left(IP.x+1, IP.y+1\right), FltErr\right)_{;}$$

$$FltErr = A - w/(2 * z0);$$

$$IP = LP + Dis * DLP_{;}$$

$$Dis = \left(PP - LP\right) * PN_{;}$$

   and

$$DLP = -LP_{,}$$

   wherein $Z$ is the reference image, $Z(x,y)$ is a depth value of a pixel with coordinate values $(x, y)$ in the reference image, $Z(IP.x+1, IP.y+1)$ is a depth value of a pixel with coordinate values $(IP.x+1, IP.y+1)$ in the reference image, and min means to assign $Z(x, y)$ with a smaller one of $Z(IPx+1, IPy+1)$ and $FltErr$; $LP = \left(x0, \vec{y0}, z0\right), \ PN = \left(0, \vec{0}, 1\right), \ PP = \left(0, 0, \vec{w}/2\right)$, $A$ is an initial depth value of the reference image, $w$ is a width of the first depth image, $(x0, y0, z0)$ are coordinate values of any point in the target point cloud, $IP.x$ is an x-value of coordinate values of a point $IP$, and $IP.y$ is a y-value of the coordinate values of the point $IP$.

7. The method according to claim 6, wherein the processing the pixels in the initial color image and the pixels in the initial depth image according to the depth values of the pixels in the reference image to obtain the first color image and the target depth image comprises:

   processing the initial color image to obtain the first color image according to a formula:

$$I_{c1}\left(IP.x, IP.y\right) = I_c\left(x, y\right) * \left(\left(Z\left(x, y\right)+1\right) > FltErr\right),$$

wherein $I_c$ is the initial color image, $I_{c1}$ is the first color image, $I_c(x, y)$ is a pixel value of a pixel with coordinate values $(x, y)$ in the initial color image, and $Z(x, y)$ is the depth value of the pixel with the coordinate values $(x, y)$ in the reference image. $I_{c1}(IP.x, IP.y)$ is a pixel value of a pixel with coordinate values $(IP.x, IP.y)$ in the first color image;

processing the initial depth image to obtain the target depth image according to a formula:

$$I_{d2}\left(IP.x, IP.y\right) = I_d\left(x, y\right) * \left(\left(Z\left(x, y\right)+1\right) > FltErr\right),$$

wherein $I_d$ represents the initial depth image, $I_{d2}$ represents the target depth image, $I_d(x, y)$ is a depth value of a pixel with coordinate values $(x, y)$ in the initial depth image, $I_{d2}(IP.x, IP.y)$ is a depth value of a pixel with coordinate values $(IP.x, IP.y)$ in the target depth image.

8. The method according to any one of claims 1 to 4, wherein the performing associative processing on the initial color image and the initial depth image to obtain a first color image and a target depth image, wherein the target depth image comprises a plurality of reference pixels comprises:

   determining a preset depth of field of the target 3D image, the preset depth of field of the target 3D image on an x-axis being nx0 to nx1, and the preset depth of field on the y-axis being ny0 to ny1;
   determining a ratio of the preset depth of field to a depth range of the initial depth image according to formulas:

$$DepthRateX = \left(nx1 - nx0\right)/\left(D\max - D\min\right),$$

   and

$$DepthRateY = \left(ny1 - ny0\right)/\left(D\max - D\min\right),$$

   wherein *DepthRateX* is a ratio of the preset depth of field to the depth range of the initial depth image on the x-axis, *DepthRateY* is a ratio of the preset depth of field to the depth range of the initial depth image on the y-axis, and $D$ max is a maximum depth value and D min is a minimum depth value of the initial depth image;
   determining Pos_x and Pos_y according to formulas:

$$Pos\_x = x + \left(I_d\left(x, y\right) - D\min\right) * DethRateX + nx0,$$

$$Pos\_y = y + \left(I_d\left(x, y\right) - D\min\right) * DethRateY + ny0;$$

   determining the first color image and the target depth image according to formulas:

$$I_{c1}\left(Pos\_x, Pos\_y\right) = I_c\left(x, y\right),$$

   and

$$I_{d2}\left(Pos\_x, Pos\_y\right) = I_d\left(x, y\right),$$

   wherein $I_c$ is the initial color image, $I_{c1}$ is the first color image, $I_c(x, y)$ is a pixel value of a pixel with coordinate values $(x, y)$ in the initial color image, $I_{c1}(Pos\_x, Pos\_y)$ is a pixel value of a pixel with coordinate values $(Pos\_x, Pos\_y)$ in the first color image, $I_d$ is the initial depth image, $I_{d2}$ is the target depth image, and $I_{d2}(Pos\_x, Pos\_y)$ is a depth value of a pixel with coordinate values $(Pos\_x, Pos\_y)$ in the target depth image.

9. A 3D image generating device, **characterized by** comprising:

a separating unit configured to separate a target 2D image to obtain an initial color image and an initial depth image;

a processing unit configured to perform associative processing on the initial color image and the initial depth image to obtain a first color image and a target depth image, wherein the target depth image comprises a plurality of reference pixels;

a first determining unit configured to determine target pixels according to depth values of the reference pixels, wherein the target pixels are pixels that are holes in the first color image;

a second determining unit configured to determine hole filling values of the target pixels according to the reference pixels, fill the target pixels, and generate a target color image;

a generating unit configured to interleave the initial color image and the target color image to generate a target 3D image.

10. A computer device, **characterized by** comprising:

at least one connected processor, a memory and a transceiver, wherein the memory is configured to store program codes, and the processor is configured to call the program codes in the memory to execute operations of the 3D image generating method of any one of claims 1 to 4.

A target 2D image is separated to obtain an initial color image and an initial depth image ⟍S01

↓

The initial color image and the initial depth image are performed with an associative processing to obtain a first color image and a target depth image, and the target depth image includes a plurality of reference pixels ⟍S02

↓

Target pixels are determined according to the depth values of the reference pixels ⟍S03

↓

A hole filling value of the target pixel is determined according to the reference pixel ⟍S04

↓

The initial color image and the target color image are interleaved to generate the target 3D image ⟍S05

FIG. 1

An initial point cloud corresponding to the first depth image is determined — S021

Coordinate values of each point in the initial point cloud is adjusted according to a preset relative displacement to obtain a target point cloud — S022

Coordinate values of each point of the target point cloud are processed to obtain a reference image — S023

The pixels in the initial color image and the pixels in the initial depth image are processed according to the depth values of the pixels in the reference image to obtain the first color image and the target depth image — S024

FIG. 2

FIG. 3

FIG. 4

FIG. 5

600

3D image generating apparatus

Separating unit ─601

Processing unit ─602

First determining unit ─603

Second determining unit ─604

Generating unit ─605

FIG. 6

FIG. 7

## INTERNATIONAL SEARCH REPORT

| | International application No. |
| --- | --- |
| | **PCT/CN2023/101651** |

| A. | CLASSIFICATION OF SUBJECT MATTER |
| --- | --- |

G06T17/00(2006.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 3D图, 三维图像, 三维模型, RGB图, 彩色图, 颜色图, 深度图, 空洞, 填充, 填补, 修复, 像素, 交织, 3D image, three dimensional image, 3D model, three dimensional model, RGB image, color image, depth image, hole, cavity, fill, recover, pixel, interlace, interleave

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115205452 A (FUTURE TECHNOLOGY (SHENYANG) CO., LTD.) 18 October 2022 (2022-10-18)<br>claims 1-10, and description, paragraphs 0028-0187 | 1-10 |
| PX | CN 115205451 A (FUTURE TECHNOLOGY (SHENYANG) CO., LTD.) 18 October 2022 (2022-10-18)<br>claims 1-10, and description, paragraphs 0028-0152 | 1-10 |
| A | CN 113902849 A (SHENZHEN ZHUIYI TECHNOLOGY CO., LTD.) 07 January 2022 (2022-01-07)<br>description, paragraphs 0229-0374 | 1-10 |
| A | CN 112102199 A (BEIKE TECHNOLOGY CO., LTD.) 18 December 2020 (2020-12-18)<br>description, paragraphs 0066-0218 | 1-10 |
| A | US 2011084966 A1 (KAO, Meng-Chao et al.) 14 April 2011 (2011-04-14)<br>entire document | 1-10 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **13 September 2023** | **20 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

<table>
<tr><td colspan="2">International application No.</td></tr>
<tr><td colspan="2"><b>PCT/CN2023/101651</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 112991193 A (WUHAN UNIVERSITY OF SCIENCE AND TECHNOLOGY) 18 June 2021 (2021-06-18)<br>entire document | 1-10 |
| A | KR 20220029335 A (SAMSUNG ELECTRONICS CO., LTD.) 08 March 2022 (2022-03-08)<br>entire document | 1-10 |

## INTERNATIONAL SEARCH REPORT
### Information on patent family members

International application No.

**PCT/CN2023/101651**

| Patent document cited in search report | | | Publication date (day/month/year) | Patent family member(s) | | | Publication date (day/month/year) |
|---|---|---|---|---|---|---|---|
| CN | 115205452 | A | 18 October 2022 | None | | | |
| CN | 115205451 | A | 18 October 2022 | None | | | |
| CN | 113902849 | A | 07 January 2022 | None | | | |
| CN | 112102199 | A | 18 December 2020 | None | | | |
| US | 2011084966 | A1 | 14 April 2011 | TW | 201114245 | A | 16 April 2011 |
| CN | 112991193 | A | 18 June 2021 | CN | 112991193 | B | 23 September 2022 |
| KR | 20220029335 | A | 08 March 2022 | US | 2022067950 | A1 | 03 March 2022 |

Form PCT/ISA/210 (patent family annex) (July 2022)